Europäisches Patentamt

European Patent Office

Office européen des brevets

(19)

(11) Veröffentlichungsnummer: **0 269 564**
**B1**

(12) **EUROPÄISCHE PATENTSCHRIFT**

(45) Veröffentlichungstag der Patentschrift:
29.08.90

(51) Int. Cl.⁵: **A61C 1/07**, F16H 21/50

(21) Anmeldenummer: **87810625.1**

(22) Anmeldetag: **02.11.87**

(54) Gerät und Werkzeugsatz zur Zahnbehandlung mit einem Winkelstück, in dem eine rotierende Bewegung in eine Hin- und Herbewegung umgewandelt wird.

(30) Priorität: **10.11.86  CH 4476/86**

(43) Veröffentlichungstag der Anmeldung:
**01.06.88 Patentblatt 88/22**

(45) Bekanntmachung des Hinweises auf die Patenterteilung:
**29.08.90 Patentblatt 90/35**

(84) Benannte Vertragsstaaten:
**AT BE CH DE FR GB LI SE**

(56) Entgegenhaltungen:
DE-C- 650 678
US-A- 4 121 342

(73) Patentinhaber: **Intensiv SA, Via Molinazzo 11,
CH-6962 Viganello(CH)**

(72) Erfinder: **Hubschmid, Walter, CH-6911 Carabietta(CH)**

(74) Vertreter: **Seehof, Michel, c/o AMMANN
PATENTANWAELTE AG BERN Schwarztorstrasse 31,
CH-3001 Bern(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Gerät zur Zahnbehandlung, mit einem Winkelstück, in dem eine rotierende Bewegung in eine Hin- und Herbewegung umgewandelt wird, wobei das vordere Ende eines mit einer rotierenden Welle verbundenen Teils exzentrisch an einer im Kopf des Winkelstücks gleitenden Werkzeughalterung angreift, um diese hin- und her zu bewegen und das Teil ein Kipphebel ist, dessen vorderes Ende in eine Ausnehmung in der Werkzeughalterung und dessen hinteres Ende in eine exzentrisch angeordnete Ausnehmung in einer Stirnseite einer drehbaren Welle greift und etwa in der Mitte des Kipphebels Mittel vorhanden sind, um den Hub des vorderen Endes des Kipphebels und damit den Hub der Werkzeughalterung kontinuierlich zu verändern.

Ein solches Gerät ist aus der DE-C-650 678 bekannt. Dabei ist der Kipphebel in einer Bohrung einer Kugel gelagert, die in einer Buchse angeordnet ist, die mittels einer durch die Wandung des Schaftes hindurchtretenden Schraube in der gewünschten Stellung gehalten werden kann. Beide Enden des Kipphebels sind kugelförmig ausgebildet. Ursprünglich war das Gerät gedacht, Wurzelkanäle auszufeilen, sodass sowohl eine Hin- und Herbewegung als auch eine Drehbewegung erwünscht waren. Um die Drehbewegung zu verhindern, ist eine Nut im Werkzeughalter und ein Längskeil in der Wandung des Winkelstückkopfes vorgesehen. Einerseits können die Drehbewegungen insbesondere infolge der Kugellagerung nicht ganz unterdrückt werden, sodass insbesondere beim Behandeln von Interdentalflächen störende Vibrationen auftreten, und andererseits ist die Hubregelung mittels Verschiebung der Kugellagerung aufwendig und einem beträchtlichen Ver schleiss ausgesetzt, sodass sich dies nicht durchsetzen konnte. Ausserdem ist durch Lösen und Anziehen einer Schraube das Einstellen der Hubhöhe zeitaufwendig.

Es ist davon ausgehend Aufgabe der Erfindung, ein Gerät zur Zahnbehandlung anzugeben, das ein leichtes Einstellen der Hubhöhe ermöglicht und dabei eine verschleissarme und störungsfreie, reine Hin- und Herbewegung erlaubt. Diese Aufgabe wird mit einem Gerät gemäss Patentanspruch 1 gelöst. Die Ausgestaltung des Kipphebels nach Anspruch 2 ermöglicht eine noch bessere Umsetzung der Rotationsbewegung in eine Hin- und Herbewegung.

In den Ansprüchen 6 und 7 ist ein Werkzeugsatz zur Verwendung in dem Gerät nach einem der Ansprüche 1–5 gekennzeichnet.

Im folgenden wird die Erfindung ahhand einer Zeichnung eines Ausführungsbeispiels näher erläutert werden.

Fig. 1 zeigt einen Längsschnitt eines Teils des erfindungsgemässen Gerätes,
Fig. 2 zeigt einen Schnitt gemäss den Linien II/II von Fig. 1, und
Fig. 3 zeigt eine Sicht auf das Gerät von Fig. 1.

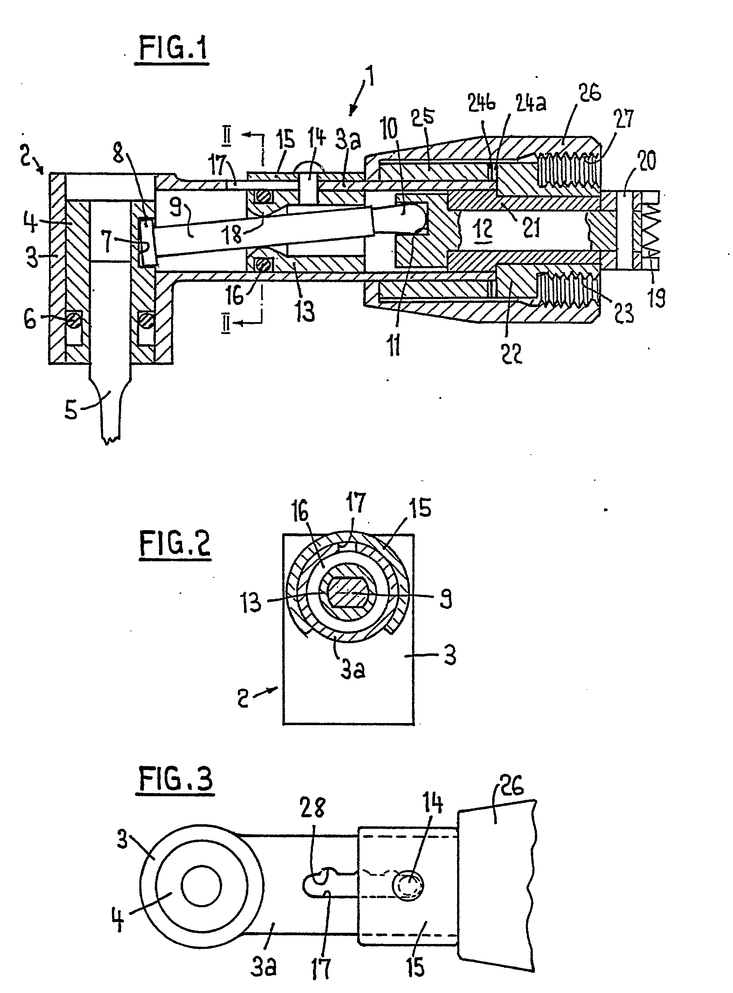

In Fig. 1 ist nur das vordere Teil 1 des Winkelstückes gezeichnet, an dem sich, unter einem Winkel, der nicht gezeichnete Handgriff anschliesst. Dieses vordere Teil enthält einen Kopf 2, der aus einem Gehäuse 3 besteht, in welchem ein Kolben 4 hin- und herbewegbar ist, der als Werkzeughalterung dient und in dem das Werkzeug, beispielsweise in Feile 5, eingeklemmt ist. Der Kolben 4 wird mittels einem O-Ring 6 gehalten. Der Kolben 4 weist an seinem oberen Teil eine Ausnehmung 7 auf, in welche das eine Ende 8 eines Kipphebels 9 greift. Das vordere Ende 8 kann als Scheibe ausgebildet sein. Das hintere Ende 10 des Kipphebels, beispielsweise als abgerundeter Zapfen ausgebildet, greift in eine exzentri sche Ausnehmung 11 einer Welle 12. Das andere Ende der Welle 12 ist als Zahnkrone 19 ausgebildet, die unter einem Winkel in eine eingezeichnete, entsprechende Zahnkrone einer Antriebswelle im Handgriff greift, die über eine biegsame Welle mit einem Motor einer Zahnbohrmaschine verbunden werden kann. Die Zahnkrone 19 wird durch einen Spannstift 20 gesichert.

Etwa in der Mitte des Kipphebels 9 ist ein Schiebelager 13 angeordnet, das über eine Niete 14 mit einer Schiebefeder 15 verbunden ist, die nicht um den ganzen Umfang des Gehäuses greift, siehe Fig. 2. Das Schiebelager ist mittels eines O-Ringes 16 selbsthemmend gehalten. Die Niete 14 läuft in einem entsprechenden Schlitz 17 des Gehäuseteils 3a. Aus den Fig. 1 und 2 ist ersichtlich, dass die Lagerstelle 18 einen etwa rechteckigen Querschnitt aufweist und dass die Kanten dieser Lagerstelle abgerundet sind. Dadurch wird die Bewegung des Kipphebels 9 begrenzt, sodass aus der Rotationsbewegung eine lineare, reine Hin- und Herbewegung des Werkzeughalters entsteht, ohne störende Vibrationen. Ausserdem wird durch diese Lagerung der Verschleiss stark herabgesetzt. Infolge des in einer Richtung abgeflachten Lagers ist ein zylindrischer Kipphebel brauchbar, doch kann die Umsetzung der Rotationsbewegung in eine lineare verbessert werden, falls der Querschnitt des Kipphebels 9 im Verschiebebereich des Lagers demjenigen des Lagers angepasst ist, d.h. auch flach ausgebildet wird. Durch Verschieben des Schiebelagers wird der Weg, respektive der Hub des vorderen Endes 8 des Kipphebels verändert und damit auch der Hub der kolbenartigen Werkzeughalterung 4.

Eine Drehung der Welle 12 verursacht eine bestimmte Bewegung des Kipphebels 9 bzw. seines vorderen Endes 8, mit einer kleinen waagrechten und einer senkrechten Komponente, welche Bewegung in der Ausnehmung 7 des Kol bens 4 in eine Hin- und Herbewegung desselben umgewandelt wird. Durch Verschieben der Schiebefeder mit dem daran befestigten Schiebelager ist es möglich, den Hub des Kolbens bis zu einem maximalen Hub kontinuierlich zu verändern, wodurch es möglich ist, bequem und schnell den Hub der Feile den Gegebenheiten anzupassen, ohne das Winkelstück auszuwechseln.

Gemäss Fig. 3 sind an einer Seite des Schlitzes 17 Einbuchtungen 28 angeordnet, in die die Niete 14 eingerastet werden kann, falls jeweils ein definierter Hub gewünscht wird.

Um einen Teil der Welle 12 ist ein Sinterlager 21 angeordnet, und diesem gegenüber befindet sich ein Anpassungsstück 22, das sich von der Zahnkrone 19 bis etwa zur Mitte der Welle 12 erstreckt. Hinten, bei der Zahnkrone, weist das Anpassungsstück ein Aussengewinde 23 auf und vorne endet es in einen Zahnkranz 24a, der mit einem Zahnkranz 24b an einer Buchse 25, die mit dem Gehäuseteil 3a fest verbunden ist, in Eingriff gelangt. Das Anpassungsstück 22, das frei auf der Welle 12 läuft, dient der Anpassung des Kopfes, um diesen in einer bestimmten Stellung zu befestigen. Um die Buchse und das Anpassungsstück, und mit einem Ende um das kopfseitige Ende der Buchse greifend, ist eine Ueberwurfmutter 26 mit einem Innengewinde 27 angeordnet, das um ein entsprechendes Gewinde im Teil, das sich im Handgriff befindet, greift, und in welches das vordere Ende der Drehwelle geschraubt werden kann.

Es ist von besonderem Vorteil, falls die auf ein Gerät für die Zahnbehandlung steckbare Vorrichtung, insbesondere zur Behandlung von Interdentalflächen, gemäss der EP-B-0 074 331 des gleichen Anmelders verwendet wird, wobei der Bearbeitungsteil der Feile diamantbeschichtet ist und eine derartige Biegsamkeit und geringe gleich mässige Dicke besitzt, dass er sich leicht der Form des zu bearbeitenden Teiles anpassen kann und die Feile ein durchgehend hohles Halteteil aufweist und der Kopf des Winkelstücks mit einer Wasserzuleitung versehen ist, die im Kopfinnern an die hin- und herbewegbare hohle Werkzeughalterung und durch das Halteteil der Feile an dessen Bearbeitungsfläche gelangt.

Des weiteren ist es von Vorteil, eine Feile mit einem Bearbeitungsteil von etwa 0,1 mm Dicke und eine Diamantbeschichtung mit einer mittleren Korngrösse von 10 - 20 um, insbesondere etwa 15 µm, eine Feile mit einem Bearbeitungsteil von etwa 0,1 0,15 mm Dicke und eine Diamantbeschichtung mit einer mittleren Korngrösse von 30 - 50 µm, insbesondere etwa 30 um, und eine Feile mit einem Bearbeitungsteil von etwa 0,2 mm Dicke und eine Diamantbeschichtung mit einer mittleren Korngrösse von 60 - 120 µm, insbesondere etwa 80 µm, zu verwenden, wobei alle Feilen einseitig beschichtet sind.

**Patentansprüche**

1. Gerät zur Zahnbehandlung, mit einem Winkelstück (1), in dem eine rotierende Bewegung in eine Hin- und Herbewegung umgewandelt wird, wobei das vordere Ende eines mit einer rotierenden Welle verbundenen Teils exzentrisch an einer im Kopf (2) des Winkelstücks gleitenden Werkzeughalterung (4) angreift, um diese hin- und her zu bewegen und das Teil ein Kipphebel (9) ist, dessen vorderes Ende (8) in eine Ausnehmung (7) in der Werkzeughalterung (4) und dessen hinteres Ende (10) in eine exzentrisch angeordnete Ausnehmung (11) in einer Stirnseite einer drehbaren Welle (12) greift, und etwa in der Mitte des Kipphebels Mittel (13) vorhanden sind, um den Hub des vorderen Endes (8) des Kipphebels und damit den Hub der Werkzeughalterung kontinuierlich zu verändern, dadurch gekennzeichnet, dass zwecks Herbeiführung einer reinen Hin- und Herbewegung die Hubbegrenzungsmittel ein Schiebelager (13) mit einer etwa rechteckigen Lagerung (18) mit abgerundeten Kanten sind und das Schiebelager über eine in einem Schlitz (17) laufenden Niete (14) mit einer Schiebefeder (15) verbunden ist, die über dem Gehäuse (3) des Kopfes (2) läuft, wobei der Schlitz (17) Einbuchtungen (28) aufweist, in die die Niete (14) einrastbar ist, um jeweils einen bestimmten Hub einzustellen.

2. Gerät nach Anspruch 1, dadurch gekennzeichnet, dass der Kipphebel (9) im Verschiebungsbereich dieses Lagers (18) einen dem Querschnitt dieses Lagers angepassten, abgeflachten Querschnitt aufweist.

3. Gerät nach Anspruch 1 oder 2, dadurch gekennzeichnet, dass die Werkzeughalterung (4) und das Schiebelager (13) mittels je einem O-Ring (6, 16) versehen sind.

4. Gerät nach einem der Ansprüche 1 bis 3, dadurch gekennzeichnet, dass die drehbare Welle (12) an ihrem der Stirnseite mit der Ausnehmung entgegengesetzten Ende mit einer Zahnkrone (19) versehen ist, die unter einem Winkel mit einer zweiten Zahnkrone einer drehbaren Antriebswelle in Eingriff gelangt.

5. Gerät nach einem der Ansprüche 1 bis 4, dadurch gekennzeichnet, dass um einen Teil der Welle (12) ein Sinterlager (21) und diesem gegenüber ein frei drehbares Anpassungsstück (22) angeordnet sind und das Anpassungsstück an dem dem Handgriff zugewandten Ende ein Aussengewinde (23) und am anderen Ende einen Zahnkranz (24a) aufweist, der mit einem Zahnkranz (24b) an einer mit dem Gehäuseteil (3a) fest verbundenen Buchse (25) in Eingriff steht.

6. Werkzeugsatz zur Verwendung in dem Gerät nach einem der Ansprüche 1 bis 5, wobei die Werkzeughalterung (4) dieses Geräts hohl ist und vorgesehen ist, den aus Feilen (5) bestehenden Werkzeugsatz aufzunehmen und wobei der die Werkzeughalterung (4) aufnehmende Kopf (2) des Winkel-stückes (1) dieses Geräts mit einer Wasserzuleit-ung versehen ist, die im Kopfinnern an die hin- und herbewegbare hohle Werkzeughalterung geführt ist, wodurch das Wasser die Werkzeughalterung (4) durchfliessen kann, dadurch gekennzeichnet, daß der Bearbeitungsteil der Feile diamantbeschichtet ist, aus Stahlblech besteht und eine derartige Biegsamkeit und geringe gleichmässige Dicke besitzt, dass er sich leicht der Form des zu bearbeitenden Teiles anpassen kann, sowie die Feile ein durchgehend hohles Halteteil aufweist, so daß Wasser durch das Halteteil der Feile (5) an dessen Bearbeitungsfläche gelangt.

7. Werkzeugsatz nach Anspruch 6, dadurch gekennzeichnet, dass der Werkzeugsatz eine Feile mit einem Bearbeitungsteil von etwa 0,1 mm Dicke und einer Diamantbeschichtung mit einer mittleren Korngrösse von 10 µm bis 20 µm, insbesondere etwa 15 µm, eine Feile mit einem Bearbeitungsteil von etwa 0,1 bis 0,15 mm Dicke und einer Diamantbeschichtung mit einer mittleren Korngrösse von 30 um bis 50 µm, insbesondere etwa 40 µm und eine Feile mit einem Bearbeitungsteil von etwa 0,2 mm Dicke und einer Diamantbeschichtung mit einer mittleren Korngrösse von 60 µm bis 120 um, insbesondere etwas 80 µm, enthält, wobei alle Feilen einseitig beschichtet sind.

## Claims

1. A device for dental treatment, having an angle piece in which the rotary motion is transformed into a reciprocating motion, the front end of a portion which is connected to a rotating shaft eccentrically engaging a tool holder (4) sliding in the head of the angle piece in order to set the latter into a reciprocating motion and said portion being a pivot lever (9) the front end (8) of which engages a recess (7) of the tool holder (4) and the rear end (10) of which engages an eccentrically disposed recess (11) in a front surface of a rotatable shaft (12), and means (13) being provided approximately in the center of the pivot lever in order to vary the stroke of the front end (8) of the pivot lever and thereby the stroke of the tool holder, in a continuous manner, characterized in that in view of producing a pure reciprocating motion, the stroke limiting means are a sliding support (13) having an approximately rectangular bearing (18) with rounded edges, and in that the sliding support is connected, by a rivet (14) running in a slot (17), to a sliding spring (15) which runs above the casing (3) of the head (2), the slot (17) being provided with cutouts (28) in which the rivet (14) catches, in order to select a respective determined stroke.

2. A device according to claim 1, characterized in that in the area of displacement of the sliding support (18), the pivot lever (9) is provided with a flattened cross section which is adapted to the cross-section of said bearing.

3. A device according to claim 1 or 2, characterized in that the tool holder (4) and the sliding support (13) are each provided with an O-ring (6, 16).

4. A device according to one of claims 1 to 3, characterized in that the rotatable shaft (12) is provided, on its end opposite the front surface having a recess, with a toothed crown (19) which engages a second toothed crown of a rotatable driving shaft at an angle.

5. A device according to one of claims 1 to 4, characterized in that a sintered bearing (21) extends around a part of the shaft (12) and a freely rotatable adaptor piece (22) is disposed on the opposite side thereof, and in that the adaptor piece is provided with an external threading (23) at the end facing the handle and with a toothed crown (24a) at the other end which engages a toothed crown (24b) of a bushing (25) which is fixedly attached to the casing portion (3a).

6. A tool set for use in the device according to one of claims 1 to 5, the tool holder of said device being hollow and adapted for receiving a set of tools consisting of files (5), and the head (2) of the angle piece (1) of said device, which receives the tool holder (4), being provided with a water supply which, inside the head, ends near the reciprocating, hollow tool holder, whereby the water is allowed to flow through the tool holder, characterized in that the working portion of the file is diamond-coated, made of steel sheet material and has such a flexibility and small, uniform thickness that it easily adapts to the shape of the part to be worked, and in that the file is provided with a continuously hollow holding portion, such that water passes through the holding portion of the file (5) to its working surface.

7. A tool set according to claim 6, characterized in that the tool set comprises a file having a working portion of about 0.1 mm thickness and a diamond coating of 10 µm to 20 µm average grain size, in particular about 15 µm, a file having a working portion of about 0.1 to 0.15 mm thickness and a diamond coating of 30 µm to 50 µm average grain size, in particular about 40 µm, and a file having a working portion of about 0.2 mm thickness and a diamond coating of 60 µm to 120 µm average grain size, in particular about 80 µm, all the files being coated on one side.

## Revendications

1. Appareil de traitement dentaire, ayant une pièce angulaire, dans laquelle un mouvement de rotation est transformé en mouvement de translation alternatif, l'extrémité avant d'une pièce rattachée à un arbre en rotation étant en engagement excentrique avec un porteoutils qui glisse dans la tête de la pièce angulaire afin de lui transmettre un mouvement alternatif, et ladite pièce étant un levier basculant (9) dont l'extrémité avant (8) s'engage dans un évidement (7) du porteoutils (4) et dont l'extrémité arrière (10) s'engage dans un évidement (11) excentriquement disposé dans la face frontale d'un arbre rotatif (12), et des moyens (13) étant prévus environ au centre du levier basculant qui permettent de modifier, de façon continue, la course de l'extrémité avant (8) du levier basculant et donc la course du porte-outils, caractérisé en ce que dans le but d'obtenir un mouvement purement alternatif, les moyens de limitation de course sont un support coulissant (13) ayant un palier (18) environ rectangulaire et à arêtes arrondies, et que ledit support coulissant est rattaché, par un rivet qui glisse dans une fente (17), à un ressort coulissant (15) qui glisse sur le boîtier (3) de la tête (2), la fente (17) présentant des entailles (28) dans lesquelles le rivet (14) peut être enclenché pour sélectionner une course déterminée respective.

2. Appareil selon la revendication 1, caractérisé en ce que dans la zone de déplacement du palier coulissant (18), le levier basculant (9) présente une section transversale amincie correspondant à la section transversale dudit support.

3. Appareil selon la revendication 1 ou 2, caractérisé en ce que le porte-outils (4) et le support coulissant (13) sont pourvus d'un anneau en 0 (6,16) respectif.

4. Appareil selon l'une des revendications 1 à 3, caractérisé en ce que l'arbre rotatif (12) est pourvu, à son extrémité opposée à la face frontale présentant l'évidement, d'une couronne dentée (19) qui s'engrène sous un angle avec une seconde couronne dentée d'un arbre d'entraînement rotatif.

5. Appareil selon l'une des revendications 1 à 4, caractérisé en ce qu'un palier fritté (21) s'étend autour d'une partie de l'arbre (12) et qu'une pièce d'adaptation (22) tournant librement est disposée du côté opposé dudit palier, et que la pièce d'adaptation présente un filet extérieur à son extrémité en regard de la poignée, et à l'autre extrémité, une couronne dentée (24a) qui s'engrène avec une couronne dentée (24b) dans une douille (25) fixée à la partie (3a) du boîtier.

6. Outillage pour l'utilisation dans l'appareil selon l'une des revendications 1 à 5, le porte-outils dudit appareil étant creux et prévu pour recevoir un ensemble d'outils constitué de limes (5), et la tête (2) de la pièce angulaire (1) dudit appareil, qui loge le porteoutils (4), présentant une amenée d'eau se dirigeant, à l'intérieur de la tête, vers le porte-outils à mouvement alternatif et creux, de sorte que l'eau peut couler à travers le porte-outils, caractérisé en ce que la partie efficace de la lime est diamantée, consiste de feuille d'acier et présente une telle flexibilité et une telle épaisseur réduite et uniforme qu'elle s'adapte facilement à la forme de la partie à être travaillée, et en ce que la lime présente une partie de serrage entièrement creuse, de sorte que l'eau atteint la surface efficace de la lime (5) en passant par sa partie de serrage.

7. Ensemble d'outils selon la revendication 6, caractérisé en ce que ledit ensemble d'outils comprend une lime ayant une partie efficace d'environ 0,1 mm d'épaisseur et un diamantage d'un grain moyen de 10 μm à 20 μm, en particulier d'environ 0,15 mm, une lime ayant une partie efficace d'environ 0,1 à 0,15 mm d'épaisseur et un diamantage d'un grain moyen de 30 μm à 50 μm, en particulier d'environ 40 μm et une lime ayant une partie efficace d'environ 0,2 mm d'épaisseur et un diamantage d'un grain moyen de 60 μm à 120 μm, en particulier d'environ 80 μm, toutes les limes étant diamantées d'un seul côté.

# FIG.1

# FIG.2

# FIG.3